# EUROPEAN PATENT APPLICATION

(11) **EP 4 664 612 A1**
(43) Date of publication of application: **17.12.2025**
(21) Application number: 24861480.2
(22) Date of filing: 01.04.2024
(51) Int. Cl.: H01M 50/10, H01M 50/244, H01M 50/291

(54) **BOX BODY, BATTERY, AND ELECTRIC DEVICE**

(30) Priority: 08.09.2023 CN 202311163619
(71) Applicant: Contemporary Amperex Technology Co., Limited, Ningde, Fujian 352100 (CN)
(72) Inventor: WU, Kai, Ningde, Fujian 352100 (CN); WANG, Liangyi, Ningde, Fujian 352100 (CN); WANG, Yalei, Ningde, Fujian 352100 (CN); QIN, Feng, Ningde, Fujian 352100 (CN); WANG, Zhi, Ningde, Fujian 352100 (CN)
(74) Representative: Gong, Jinping
(86) International application number: PCT/CN2024/085370
(87) International publication number: WO 2025/050629

(57) **Abstract**

The present application provides a housing (10), a battery (100), and an electric device, where the housing (10) includes a base plate (110), a mounting beam (130), and a module beam (120), the base plate (110) has a first side surface (111) and a second side surface (112) opposite to each other in a thickness direction (H), a reinforcement structure (113) is provided on the base plate (110), the module beam (120) is disposed on the first side surface (111), the mounting beam (130) is disposed on the second side surface (112), and the reinforcement structure (113) is configured to connect to the mounting beam (130) and/or the module beam (120). The housing (10) provided in embodiments of the present application can utilize the reinforcement structure (113) to connect the mounting beam (130) and/or the module beam (120), thereby enhancing the connection strength between the base plate (110) and the mounting beam (130) and/or the module beam (120), thus achieving the purpose of meeting the high structural strength requirements of the housing (10).

## Description

The present application incorporates by reference in its entirety Chinese Patent Application No. 202311163619.X, filed on September 8, 2023 and entitled "HOUSING, BATTERY, AND ELECTRIC DEVICE".

### TECHNICAL FIELD

The present application relates to the field of battery structure technologies, and in particular, provides a housing, a battery, and an electric device.

### BACKGROUND

When a battery is connected for use, the housing of the battery is connected to a main body of an electric device, establishing the connection between the battery and the main body of the electric device is achieved. However, during the connection process of the battery, the housing needs to bear the weight of components such as a battery module, thus requiring high structural strength for the housing of the battery.

### SUMMARY

An objective of embodiments of the present application is to provide a housing, a battery, and an electric device, aiming to address the issue in the related art where high structural strength is required for the housing when the battery is connected for use.

To achieve the above objective, the following technical solutions are used in embodiments of the present application.

According to a first aspect, an embodiment of the present application provides a housing configured to accommodate a battery module. The housing includes a base plate, a mounting beam, and a module beam, where the base plate has a first side surface and a second side surface opposite to each other in a thickness direction, a reinforcement structure is provided on the base plate, the module beam is configured to mount the battery module, the module beam is disposed on the first side surface, the mounting beam is configured to mount the housing, the mounting beam is disposed on the second side surface, and the reinforcement structure is configured to connect to the mounting beam and/or the module beam.

Beneficial effects of this embodiment of the present application: The housing provided in this embodiment of the present application enhances the connection strength between the base plate and the mounting beam and/or the module beam by incorporating a reinforcement structure on the base plate and using the reinforcement structure to connect the mounting beam and/or the module beam. As a result, the likelihood of deformation, fracture, or other damage to the module beam when mounting the battery module is reduced, and similarly, the likelihood of deformation, fracture, or other damage to the mounting beam when the housing is mounted and connected for use is reduced, thus achieving the purpose of meeting the high structural strength requirements of the housing.

In some embodiments, the reinforcement structure includes a first protrusion portion, the first protrusion portion is formed on the first side surface, and the first protrusion portion is configured to connect to the module beam.

By adopting the above technical solution, the first protrusion portion is formed on the first side surface of the base plate. The first protrusion portion is used to connect the module beam, so as to enhance the connection strength between the module beam and the base plate, thereby effectively reducing the risk of deformation or fracture between the base plate and the module beam when the housing is connected for use, and enabling the module beam to bear a heavier battery assembly.

In some embodiments, a first cavity is formed on a side of the first protrusion portion facing away from the module beam.

By adopting the above technical solution, the first protrusion portion may be formed by the base plate recessed toward the first side surface, thereby forming the first protrusion portion in a protruding shape on the first side surface, and forming the first cavity on the side of the first protrusion portion facing away from the module beam.

In some embodiments, a plurality of first protrusion portions are provided, and the plurality of first protrusion portions are disposed at intervals on the first side surface.

By adopting the above technical solution, the plurality of first protrusion portions are formed on the first side surface of the base plate. The plurality of first protrusion portions are used to connect the module beam, thereby increasing connection points between the module beam and the first side surface of the base plate, effectively enhancing the connection strength between the module beam and the base plate, and thus effectively reducing the risk of deformation or fracture between the base plate and the module beam.

In some embodiments, a clearance portion is provided on a beam sidewall of the module beam facing the base plate, and the first protrusion portion is configured to be inserted into the clearance portion.

By adopting the above technical solution, the clearance portion is provided on the corresponding beam sidewall of the module beam, and during assembly, the module beam is disposed at a corresponding position on the first side surface of the base plate, so that the first protrusion portion on the first side surface can be inserted into the clearance portion, and the first protrusion portion and the module beam are fixedly connected. In this way, on the basis of enhancing the connection strength between the base plate and the module beam through the first protrusion portion, the structure of the first protrusion portion inserted into the clearance portion also enables the module beam to be positioned and assembled on the first side surface, effectively improving accuracy of an installation position of the module beam.

In some embodiments, the clearance portion is a through hole in the beam sidewall of the module beam facing the base plate.

By adopting the above technical solution, the clearance portion is set as a through hole, and during assembly, the module beam may be disposed on the first side surface, so that the first protrusion portion passes through the through hole and is inserted into the interior of the module beam, achieving fixed connection between the base plate and the module beam through the first protrusion portion.

In some embodiments, the first protrusion portion is connected to a beam sidewall of the module beam facing away from the base plate.

By adopting the above technical solution, the first protrusion portion can pass through the clearance portion provided on the module beam and be connected to the beam sidewall of the module beam facing away from the base plate, so that the first protrusion portion can position the module beam on a side of the beam sidewall of the module beam facing the base plate, while being fixedly connected to the module beam on a side of the beam sidewall of the module beam facing away from the base plate.

In some embodiments, the module beam is welded to the base plate to form a welding portion, and/or the mounting beam is welded to the base plate to form a welding portion.

By adopting the above technical solution, welding the module beam to the base plate to form the welding portion can effectively enhance stability of the connection between the module beam and the base plate, and/or welding the mounting beam to the base plate to form the welding portion can effectively enhance stability of the connection between the mounting beam and the base plate.

In some embodiments, in the thickness direction of the base plate, a projection of the mounting beam and a projection of the module beam at least partially overlap; and at least a portion of each of the mounting beam, the module beam, and the base plate are welded together to form the welding portion.

By adopting the above technical solution, the mounting beam and the module beam can have at least partial overlap in the thickness direction of the base plate, so that the mounting beam, the module beam, and the base plate can be welded to form a welding portion connecting the three, enhancing the connection strength between the mounting beam, the module beam, and the base plate, thus achieving the purpose of meeting the high structural strength requirements of the housing.

In some embodiments, a welding clearance hole is provided on a beam sidewall of the module beam facing away from the base plate, and the welding portion is formed on a beam sidewall of the module beam facing the base plate and exposed through the welding clearance hole; and/or a welding clearance hole is provided on a beam sidewall of the mounting beam facing away from the base plate, and the welding portion is formed on a beam sidewall of the mounting beam facing the base plate and exposed through the welding clearance hole.

By adopting the above technical solution, during assembly, the welding clearance hole can be used to facilitate welding operations, allowing welding to be performed through the welding clearance hole on the interior of the module beam. This enables the module beam and the base plate to be welded to form the welding portion, or the mounting beam and the base plate to be welded to form the welding portion, or the mounting beam, the module beam, and the base plate to be welded to form the welding portion connecting the three, thereby enhancing the connection strength between the mounting beam, the module beam, and the base plate.

In some embodiments, the reinforcement structure includes a second protrusion portion, the second protrusion portion is formed on the second side surface, and the second protrusion portion is configured to connect to the mounting beam.

By adopting the above technical solution, a second protrusion portion is formed on the second side surface of the base plate. The second protrusion portion is used to connect the mounting beam, so as to enhance the connection strength between the mounting beam and the base plate, thereby effectively reducing the risk of deformation or fracture between the base plate and the mounting beam when the housing is connected for use.

In some embodiments, a second cavity is formed on a side of the second protrusion portion facing away from the mounting beam.

By adopting the above technical solution, the second protrusion portion can be formed by the base plate recessed toward the second side surface, thereby forming the second protrusion portion in a protruding shape on the second side surface, and forming the second cavity on the side of the second protrusion portion facing away from the module beam.

In some embodiments, there are a plurality of second protrusion portions, and the plurality of second protrusion portions are disposed at intervals on the second side surface.

By adopting the above technical solution, the plurality of second protrusion portions are formed on the second side surface of the base plate. The plurality of second protrusion portions are used to connect the mounting beam, thereby increasing connection points between the mounting beam and the second side surface of the base plate, effectively enhancing the connection strength between the mounting beam and the base plate, and thus effectively reducing the risk of deformation or fracture between the base plate and the mounting beam.

In some embodiments, a gap is formed between a beam sidewall of the mounting beam facing away from the base plate and the base plate, and the second protrusion portion is connected to a beam sidewall of the module beam facing away from the base plate.

By adopting the above technical solution, the second protrusion portion can be located within the gap between the beam sidewall of the mounting beam facing away from the base plate and the base plate and connected to the beam sidewall of the mounting beam facing away from the base plate, thereby achieving the purpose of structural reinforcement of the base plate with the mounting beam through the second protrusion portion.

In some embodiments, an adhesive layer is further provided between the module beam and the base plate, and the module beam is fixed to the base plate through the adhesive layer; and/or an adhesive layer is further provided between the mounting beam and the base plate, and the mounting beam is fixed to the base plate through the adhesive layer.

By adopting the above technical solution, on the basis of the module beam and the base plate being connected through the first protrusion portion or fixed by welding, the adhesive layer is further used to bond the module beam to the base plate, thereby enhancing stability of the connection between the module beam and the base plate, and thus enhancing the connection strength between the module beam and the base plate; and/or, on the basis of the mounting beam and the base plate being connected through the second protrusion portion or fixed by welding, the adhesive layer is further used to bond the mounting beam to the base plate, thereby enhancing stability of the connection between the mounting beam and the base plate, and thus enhancing the connection strength between the mounting beam and the base plate, achieving the purpose of meeting the high structural strength requirements of the housing.

In some embodiments, the base plate is provided with fluid channels, and the fluid channels contain a heat exchange medium for heat exchange with the battery module.

By adopting the above technical solution, the fluid channels are provided on the base plate to allow the heat exchange medium to perform heat exchange with the battery module, achieving cooling of the internal battery module.

According to a second aspect, an embodiment of the present application further provides a battery including a battery module and the housing as described above, where the battery module is accommodated within the housing and mounted on the module beam.

Beneficial effects of this embodiment of the present application: The battery provided in this embodiment of the present application includes the above housing, and on the basis of the high structural strength of the housing, the battery also has high structural strength, with a lower risk of deformation, fracture, or other damage to the housing when the battery is connected for use.

According to a third aspect, an embodiment of the present application further provides an electric device including the battery as described above, where the battery is configured to provide electrical energy.

Beneficial effects of this embodiment of the present application: The electric device provided in this embodiment of the present application includes the above battery, and on the basis of the high structural strength of the battery, the battery can more stably provide electrical energy to the electric device.

### BRIEF DESCRIPTION OF DRAWINGS

To more clearly illustrate technical solutions in embodiments of the present application, drawings required for use in the embodiments or descriptions of related art are briefly introduced below. Apparently, the drawings described below are merely some embodiments of the present application, and for a person of ordinary skill in the art, other drawings can be obtained based on these drawings without creative effort.
FIG. 1 is a schematic structural diagram of a vehicle according to some embodiments of the present application;
FIG. 2 is an exploded view of a battery according to some embodiments of the present application;
FIG. 3 is a schematic structural diagram of a base plate from a perspective of a first side surface according to some embodiments of the present application;
FIG. 4 is a schematic structural diagram of a base plate and a module beam in a separated state according to some embodiments of the present application;
FIG. 5 is a schematic structural diagram of a module beam from a side facing a base plate according to some embodiments of the present application;
FIG. 6 is a schematic structural diagram of first protrusion portions with first cavities formed on a side facing away from a module beam according to some embodiments of the present application;
FIG. 7 is a schematic structural diagram of a base plate from a perspective of a second side surface according to some embodiments of the present application;
FIG. 8 is a schematic structural diagram of a base plate and a mounting beam in a separated state according to some embodiments of the present application; and
FIG. 9 is a schematic structural diagram of second protrusion portions with second cavities formed on a side facing away from a mounting beam according to some embodiments of the present application.

Reference signs in the drawings:
1000. vehicle;
100. battery; 200. controller; 300. motor;
10. housing; 11. first portion; 12. second portion; 20. battery module;
110. base plate; 111. first side surface; 112. second side surface; 113. reinforcement structure; 1131. first protrusion portion; 1132. first cavity; 1133. second protrusion portion; 1134. second cavity;
120. module beam; 121. clearance portion; 122. welding clearance hole;
130. mounting beam; and
H. thickness direction.

### DESCRIPTION OF EMBODIMENTS

Embodiments of the present application are described in detail below, examples of which are illustrated in the accompanying drawings, where the same or similar reference numerals denote the same or similar elements or elements having the same or similar functions throughout. The embodiments described below with reference to the accompanying drawings are illustrative and merely for explaining the present application, and should not be construed as limitations on the present application.

In the description of the present application, it should be understood that terms such as "length," "width," "upper," "lower," "front," "rear," "left," "right," "vertical," "horizontal," "top," "bottom," "inner," "outer," and the like indicating orientation or positional relationships are based on the orientation or positional relationships shown in the drawings, solely for the convenience of describing the present application and simplifying the description, and do not indicate or imply that an apparatus or element referred to must have a specific orientation, be constructed, and operate in a specific orientation, and thus should not be construed as limitations on the present application.

Furthermore, the terms "first" and "second" are used for descriptive purposes only and should not be understood as indicating or implying relative importance or implicitly indicating a number of technical features indicated. Thus, a feature defined with "first" or "second" may explicitly or implicitly include one or more of such features. In the description of the present application, "plurality" means two or at least two unless otherwise specifically stated.

In the present application, unless otherwise specified and defined explicitly, the terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the present application as appropriate to specific situations.

Currently, from the perspective of market development, application of power batteries is being more extensive. Power batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

During use, a battery is generally mounted on an electric device through a mounting beam on a housing for use. Thus, in a usage state, a battery module inside the battery exerts a force on the housing, meaning the housing needs to bear the gravity of the battery module, requiring the housing to withstand significant forces during connection and use. Therefore, the housing requires high structural strength to reduce the risk of deformation, fracture, or other damage during battery use.

To meet the high structural strength requirements of the housing, a module beam may be provided on an inner side of a base plate of the housing, with the battery module mounted on the module beam, while a mounting beam is provided on an outer side of the base plate of the housing, through which the housing is connected for use. The beam structures of the module beam and the mounting beam are utilized to enhance overall structural strength of the housing, reducing the risk of deformation, fracture, or other damage to the housing. However, in actual use, there may be risks of detachment, fracture, or other issues between the module beam, the mounting beam and the base plate, leading to inability of the housing to function normally, thereby affecting performance and lifespan of the battery.

Based on the above considerations, to address the issue of high structural strength requirements of the housing when the battery is connected for use, a housing is designed, where a module beam and a mounting beam are respectively provided on a first side surface and a second side surface of a base plate of the housing, while a reinforcement structure is provided on the base plate. The reinforcement structure is used to connect the mounting beam and/or the module beam, so as to enhance the connection strength between the mounting beam and/or the module beam and the base plate.

In such a housing, by using the reinforcement structure provided on the base plate to strengthen connection with the mounting beam and/or the module beam, the connection strength between the mounting beam and/or the module beam and the base plate is effectively enhanced. During connection and use of the battery, the connection strength between the module beam and the base plate is improved, thus reducing the probability of detachment, fracture, or other risks between the module beam and the base plate. Similarly, the connection strength between the mounting beam and the base plate is also improved, thus reducing the probability of detachment, fracture, or other risks between the mounting beam and the base plate. Therefore, the design of the base plate connecting the mounting beam and/or the module beam through the reinforcement structure can improve structural strength of the housing, enhancing stability of use of the housing.

The housing disclosed in embodiments of the present application may be used in an electric device using a battery as a power source or in various energy storage systems using a battery as an energy storage element. The electric device may include but is not limited to a mobile phone, a tablet, a laptop, an electric toy, an electric tool, an electric scooter, an electric vehicle, a ship, a spacecraft, or the like. The electric toy may include a fixed or mobile electric toy, such as a gaming console, an electric car toy, an electric ship toy, an electric airplane toy, and the like, while the spacecraft may include an airplane, a rocket, a space shuttle, a spaceship, and the like.

For convenience of description, the electric device in an embodiment of the present application being a vehicle 1000 is used as an example for description of the following embodiments.

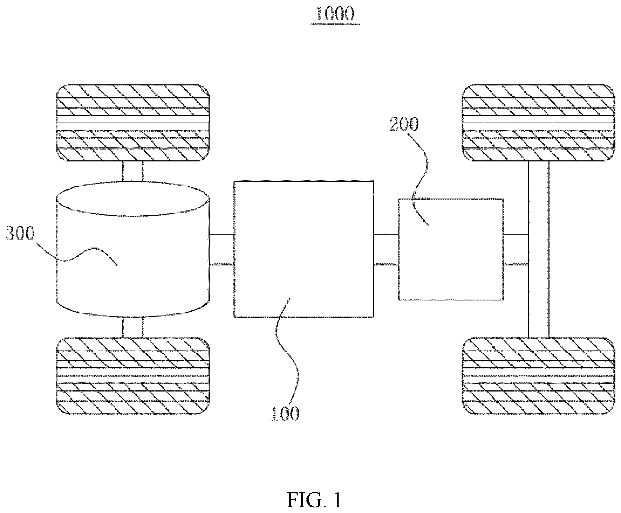

Referring to FIG. 1, a schematic structural diagram of a vehicle 1000 according to some embodiments of the present application is shown. The vehicle 1000 may be a fuel vehicle, a gas vehicle, or a new energy vehicle, where the new energy vehicle may be a battery electric vehicle, a hybrid vehicle, or an extended-range vehicle, or the like. A battery 100 is provided inside the vehicle 1000, and the battery 100 may be disposed at a bottom, front, or rear of the vehicle 1000. The battery 100 may be used for powering the vehicle 1000, for example, the battery 100 may serve as an operational power source for the vehicle 1000. The vehicle 1000 may further include a controller 200 and a motor 300, where the controller 200 is configured to control the battery 100 to supply power to the motor 300, for example, for operational power demands during starting, navigation, and driving of the vehicle 1000.

In some embodiments of the present application, the battery 100 may be used not only as the operational power source for the vehicle 1000 but also as a driving power source for the vehicle 1000, replacing or partially replacing fossil fuel or natural gas to provide driving traction for the vehicle 1000.

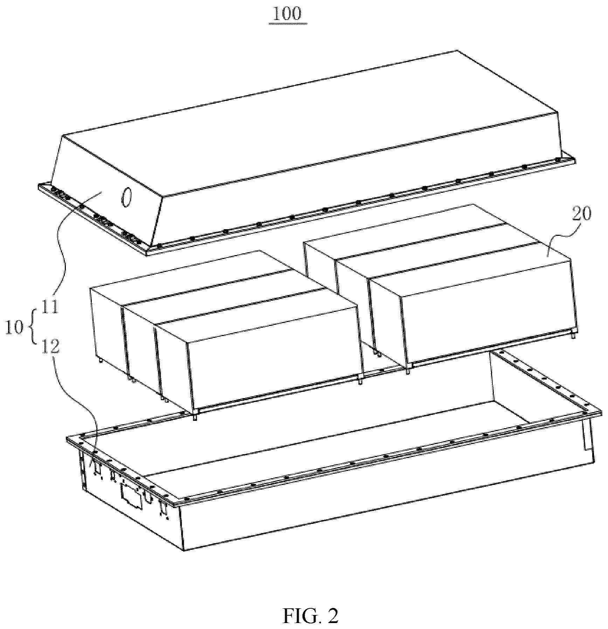

Referring to FIG. 2, an exploded view of a battery 100 according to some embodiments of the present application is shown. The battery 100 includes a housing 10 and a battery module 20, where the battery module 20 is accommodated within the housing 10. The housing 10 is configured to provide an accommodating space for the battery module 20, and the housing 10 may be a variety of structures. In some embodiments, the housing 10 may include a first portion 11 and a second portion 12. The first portion 11 and the second portion 12 fit together so that the first portion 11 and the second portion 12 jointly define a space for accommodating the battery module 20. The second portion 12 may be a hollow structure with one end open, and the first portion 11 may be a plate-like structure, where the first portion 11 covers the open side of the second portion 12 for the first portion 11 and the second portion 12 to jointly define an accommodating space. Alternatively, the first portion 11 and the second portion 12 may both be hollow structures with one side open, where the open side of the first portion 11 is engaged with the open side of the second portion 12. Of course, the housing 10 formed by the first portion 11 and the second portion 12 may have a variety of shapes, such as cylinder or cuboid.

According to some embodiments of the present application, referring to FIG. 2 to FIG. 4, FIG. 7, and FIG. 8, an embodiment of the present application provides a housing 10 configured to accommodate a battery module 20, the housing 10 including a base plate 110, a mounting beam 130, and a module beam 120, where the base plate 110 has a first side surface 111 and a second side surface 112 opposite to each other in a thickness direction H, a reinforcement structure 113 is provided on the base plate 110, the module beam 120 is configured to mount the battery module 20, the module beam 120 is disposed on the first side surface 111, the mounting beam 130 is configured to mount the housing 10, the mounting beam 130 is disposed on the second side surface 112, and the reinforcement structure 113 is configured to connect to the mounting beam 130 and/or the module beam 120.

The base plate 110 is a base structure of the housing 10, and the base plate 110 is generally selectable as a plate-like structure. It can be understood that the base plate 110 may include but is not limited to an aluminum plate, a steel plate, an iron plate, or an alloy plate.

The first side surface 111 and the second side surface 112 of the base plate 110 refer to two side surfaces opposite to each other in the thickness direction H of the base plate 110, where the first side surface 111 may be regarded as a side surface of the base plate 110 facing the interior of the housing 10, and correspondingly, the second side surface 112 may be regarded as a side surface of the base plate 110 facing the exterior of the housing 10.

It can be understood that the reinforcement structure 113 is a structure provided on the base plate 110 and configured to enhance connection with the mounting beam 130 and/or the module beam 120. Optionally, the reinforcement structure 113 may be a structure formed by the base plate 110 itself and protruding toward one side, such as a protrusion structure or a bent structure formed by recessing, bending, or the like of the base plate 110. Alternatively, the reinforcement structure 113 may be an external structure fixed to a surface of the base plate 110 by welding, bonding, or the like.

Optionally, the reinforcement structure 113 may be provided on the first side surface 111 of the base plate 110, and the module beam 120 is connected to the first side surface 111 of the base plate 110 through the reinforcement structure 113, so as to improve the connection strength between the module beam 120 and the base plate 110. Alternatively, the reinforcement structure 113 may be provided on the second side surface 112 of the base plate 110, and the mounting beam 130 is connected to the second side surface 112 of the base plate 110 through the reinforcement structure 113, so as to improve the connection strength between the mounting beam 130 and the base plate 110. Alternatively, the reinforcement structure 113 may be provided on both the first side surface 111 and the second side surface 112 of the base plate 110 simultaneously, so as to improve the connection strength between the base plate 110 and both the module beam 120 and the mounting beam 130 simultaneously.

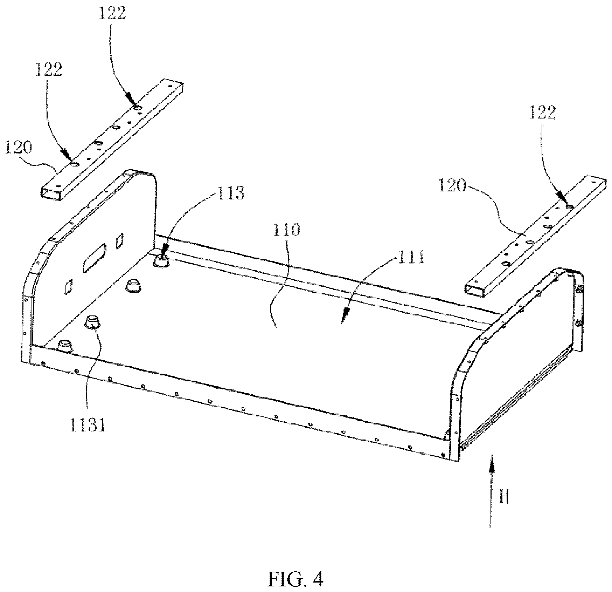

The module beam 120 is disposed on the first side surface 111 of the base plate 110 and configured to mount the battery module 20; the module beam 120 may include but is not limited to an aluminum beam, a steel beam, or an alloy beam; and the module beam 120 may be an extruded aluminum structure, a rectangular beam (that is, a cross-section of the module beam 120 is rectangular, as shown in FIG. 4, where the module beam 120 in FIG. 4 is a rectangular beam with a rectangular cross-section), a U-shaped beam (that is, a cross-section of the module beam 120 is approximately U-shaped), or other beam structures. There may be one or a plurality of module beams 120, and when there are a plurality of module beams 120, the plurality of module beams 120 may be disposed at intervals in a length direction of the base plate 110 (perpendicular to the thickness direction H), and the reinforcement structure 113 may be connected to at least one of the module beams 120. As an example, the number of the module beams 120 may be selected as two, where two module beams 120 are respectively disposed at two ends of the first side surface 111 along the length direction of the base plate 110, and both module beams 120 are connected to the first side surface 111 of the base plate 110 via reinforced connections.

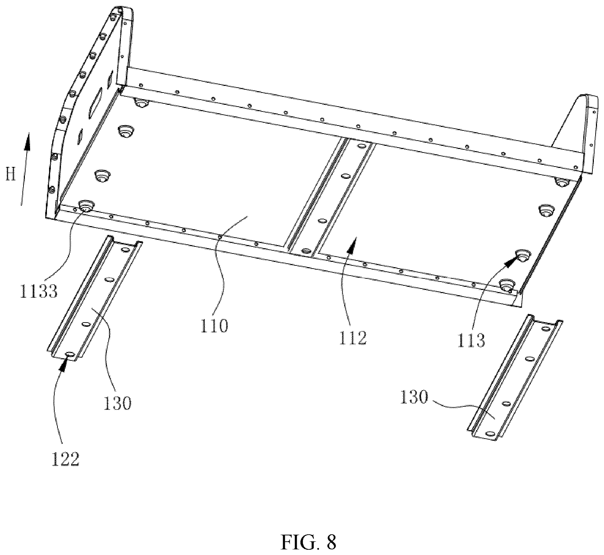

The mounting beam 130 is disposed on the second side surface 112 of the base plate 110 and configured to mount the housing 10; the mounting beam 130 may include but is not limited to an aluminum beam, a steel beam, or an alloy beam; and the mounting beam 130 may be a rectangular beam (that is, a cross-section of the mounting beam 130 is rectangular), a reversed U-shaped beam (that is, a cross-section of the mounting beam 130 is approximately reversed U-shaped, as shown in FIG. 8, where the cross-section of the mounting beam 130 in FIG. 8 is approximately U-shaped), or other beam structures. There may be one or a plurality of mounting beams 130, and when there are a plurality of mounting beams 130, the plurality of mounting beams 130 may be disposed at intervals along the length direction of the base plate 110, and the reinforcement structure 113 may be connected to at least one of the mounting beams 130. As an example, the number of the mounting beams 130 may be selected as three, where two of the three mounting beams 130 are respectively disposed at two ends of the second side surface 112 along the length direction of the base plate 110, and another is disposed at a middle portion of the second side surface 112 along the length direction of the base plate 110, where the two mounting beams 130 disposed at the two ends may be connected to the second side surface 112 of the base plate 110 through the reinforcement structure 113, and the mounting beam 130 disposed at the middle portion may be directly welded, bonded, screwed, or the like to the second side surface 112 of the base plate 110.

The housing 10 provided in the embodiments of the present application, enhances the connection strength between the base plate 110 and the mounting beam 130 and/or the module beam 120 by incorporating a reinforcement structure 113 on the base plate 110 and using the reinforcement structure 113 to connect the mounting beam 130 and/or the module beam 120. As a result, the likelihood of deformation, fracture, or other damage to the module beam 120 when mounting the battery module 20 is reduced, and similarly, the likelihood of deformation, fracture, or other damage to the mounting beam 130 when the housing 10 is mounted and connected for use is reduced, thus achieving the purpose of meeting the high structural strength requirements of the housing 10.

According to some embodiments of the present application, referring to FIG. 2 to FIG. 4, the reinforcement structure 113 includes a first protrusion portion 1131, the first protrusion portion 1131 is formed on the first side surface 111, and the first protrusion portion 1131 is configured to connect to the module beam 120.

The first protrusion portion 1131 is formed on the first side surface 111, and optionally, the first protrusion portion 1131 may be formed by the base plate 110 protruding toward the first side surface 111. Alternatively, the first protrusion portion 1131 may be formed by fixing an external component to the base plate 110 through welding, bonding, screwing, or the like.

The first protrusion portion 1131 may include but is not limited to a columnar structure, an arc-shaped structure, a hemispherical structure, or a block-shaped structure. There may be one or a plurality of the first protrusion portions 1131, and when the number of the first protrusion portions 1131 is provided in plurality, the plurality of first protrusion portions 1131 may be arranged along a length direction of the module beam 120 (perpendicular to the thickness direction H) on the first side surface 111, or the plurality of first protrusion portions 1131 may be distributed in an array on the first side surface 111.

The first protrusion portion 1131 is connected to the module beam 120, and optionally, the first protrusion portion 1131 may be connected to the module beam 120 through bonding, welding, or screwing. Alternatively, the first protrusion portion 1131 may be inserted into the interior of the module beam 120 and then connected to the module beam 120 through bonding, welding, or screwing.

With such an arrangement, the first protrusion portion 1131 is formed on the first side surface 111 of the base plate 110. The first protrusion portion 1131 is used to connect the module beam 120, so as to enhance the connection strength between the module beam 120 and the base plate 110, thereby effectively reducing the risk of deformation or fracture between the base plate 110 and the module beam 120 when the housing 10 is connected for use, and enabling the module beam 120 to bear a heavier battery module 20.

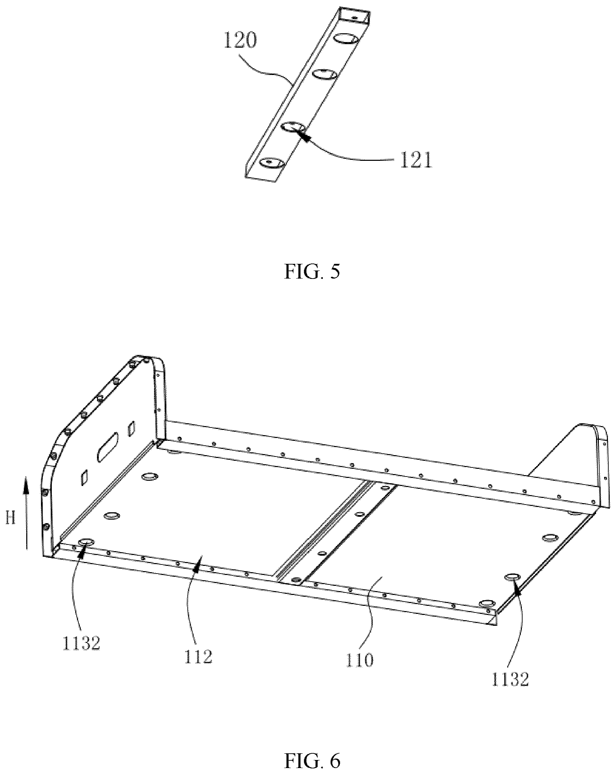

According to some embodiments of the present application, referring to FIG. 4, FIG. 6, and FIG. 7, a first cavity 1132 is formed on a side of the first protrusion portion 1131 facing away from the module beam 120.

It can be understood that the first protrusion portion 1131 may be a structure formed by the base plate 110 recessed toward the first side surface 111 and protruding from the first side surface 111, thereby forming the first cavity 1132 on the side of the first protrusion portion 1131 facing away from the module beam 120.

With such an arrangement, a processing procedure for the first protrusion portion 1131 on the base plate 110 may be performed concurrently with a processing procedure for manufacturing the base plate 110, thereby effectively reducing manufacturing procedures for the housing 10 and improving manufacturing efficiency of the housing 10. In addition, the first protrusion portion 1131 is formed through recessing of the base plate 110 itself with the first cavity 1132 at its back, and as compared to adding an external structure to form the first protrusion portion 1131, the weight of the housing 10 is not increased, thus not increasing a force exerted on the mounting beam 130 by the weight of the housing 10 when the housing 10 is mounted via the mounting beam 130, thereby reducing the probability of damage to the mounting beam 130.

Optionally, a protrusion block may be added to the mounting beam 130, so that when the mounting beam 130 is assembled on the second side surface 112, the protrusion block can be inserted into the first cavity 1132. Then, when the module beam 120 and the first protrusion portion 1131 are welded, the protrusion block, the module beam 120, and the first protrusion portion 1131 may also be welded together to form a unified structure, improving the connection strength between the module beam 120, the base plate 110, and the mounting beam 130. The method of adding the protrusion block to the mounting beam 130 may include welding an external block to the mounting beam 130 or screwing a block to the mounting beam 130, or the like.

According to some embodiments of the present application, referring to FIG. 2, FIG. 4, and FIG. 7, a plurality of first protrusion portions 1131 are provided, and the plurality of first protrusion portions 1131 are disposed at intervals on the first side surface 111.

The first protrusion portions 1131 may be disposed at intervals on the first side surface 111 along any direction. As an example, in some specific implementations, the plurality of first protrusion portions 1131 may be distributed at intervals along a length direction of the module beam 120, and when the module beam 120 is disposed on the first side surface 111, the plurality of first protrusion portions 1131 may be distributed along the length direction of the module beam 120 and respectively connected to the module beam 120, thereby achieving reinforced connection between the module beam 120 and the first side surface 111, effectively improving the connection strength between the module beam 120 and the base plate 110.

With such an arrangement, the plurality of first protrusion portions 1131 are formed on the first side surface 111 of the base plate 110. The plurality of first protrusion portions 1131 are used to connect the module beam 120, thereby increasing connection points between the module beam 120 and the first side surface 111 of the base plate 110, effectively enhancing the connection strength between the module beam 120 and the base plate 110, and thus effectively reducing the risk of deformation or fracture between the base plate 110 and the module beam 120.

According to some embodiments of the present application, referring to FIG. 4, FIG. 5, and FIG. 7, a clearance portion 121 is provided on a beam sidewall of the module beam 120 facing the base plate 110, and the first protrusion portion 1131 is configured to be inserted into the clearance portion 121.

The clearance portion 121 may be a hole structure provided on the beam sidewall of the module beam 120 facing the base plate 110, where the first protrusion portion 1131 can be inserted into the hole structure, and the first protrusion portion 1131 may be connected to any beam sidewall of the module beam 120, for example, connected to the beam sidewall of the module beam 120 facing the base plate 110, or connected to the beam sidewall of the module beam 120 facing away from the base plate 110.

Alternatively, the clearance portion 121 may be a groove structure formed on the beam sidewall of the module beam 120 facing the base plate 110, where the first protrusion portion 1131 can be inserted into the groove structure and accommodated within the groove structure, and the first protrusion portion 1131 may be connected to an inner wall of the groove structure, for example, fixedly connected through welding, bonding, or the like.

With such an arrangement, the clearance portion 121 is provided on the corresponding beam sidewall of the module beam 120, and during assembly, the module beam 120 is disposed at a corresponding position on the first side surface 111 of the base plate 110, so that the first protrusion portion 1131 on the first side surface 111 can be inserted into the clearance portion 121, and the first protrusion portion 1131 and the module beam 120 are fixedly connected, achieving improved the connection strength between the base plate 110 and the module beam 120. In addition, the structure of the first protrusion portion 1131 inserted into the clearance portion 121 also enables the module beam 120 to be positioned and assembled on the first side surface 111, improving accuracy of an installation position of the module beam 120 to a certain extent.

According to some embodiments of the present application, referring to FIG. 4, FIG. 5, and FIG. 7, the clearance portion 121 is a through hole in the beam sidewall of the module beam 120 facing the base plate 110.

The through hole provided on the beam sidewall of the module beam 120 facing the base plate 110 may have a diameter equal to a maximum outer diameter of the first protrusion portion 1131, and during assembly, the first protrusion portion 1131 may be correspondingly engaged in the through hole for positioning assembly; alternatively, the diameter of the through hole provided on the beam sidewall of the module beam 120 may be larger than the maximum outer diameter of the first protrusion portion 1131, and during assembly, the first protrusion portion 1131 only needs to be inserted into the corresponding through hole.

With such an arrangement, the clearance portion 121 is set as a through hole, and during assembly, the module beam 120 may be disposed on the first side surface 111, so that the first protrusion portion 1131 passes through the through hole and is inserted into the interior of the module beam 120, achieving fixed connection between the base plate 110 and the module beam 120 through the first protrusion portion 1131.

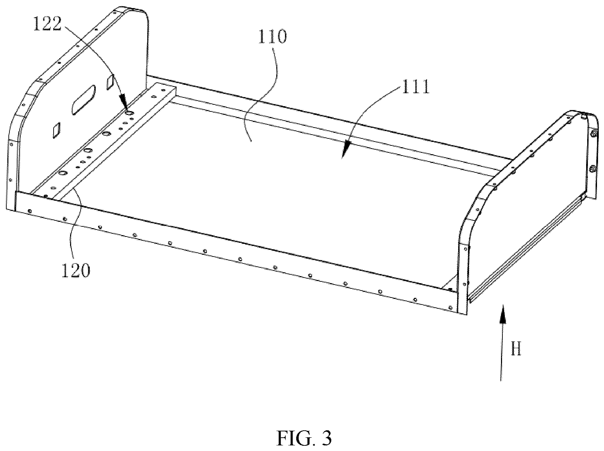

According to some embodiments of the present application, referring to FIG. 3 to FIG. 5 and FIG. 7, the first protrusion portion 1131 is connected to a beam sidewall of the module beam 120 facing away from the base plate 110.

It can be understood that the first protrusion portion 1131 can be inserted into the interior of the module beam 120 through the clearance portion 121, and the first protrusion portion 1131 can abut against the beam sidewall of the module beam 120 facing away from the base plate 110 within the interior of the module beam 120, so as to facilitate connection between the first protrusion portion 1131 and the beam sidewall of the module beam 120 facing away from the base plate 110.

Optionally, a connection method between the first protrusion portion 1131 and the beam sidewall of the module beam 120 facing away from the base plate 110 may include but is not limited to welding, bonding, or screwing. As an example, the first protrusion portion 1131 can be fixed to the beam sidewall of the module beam 120 facing away from the base plate 110 through spot welding.

With such an arrangement, the first protrusion portion 1131 can pass through the clearance portion 121 provided on the module beam 120 and be connected to the beam sidewall of the module beam 120 facing away from the base plate 110, so that the first protrusion portion 1131 can position the module beam 120 on a side of the beam sidewall of the module beam 120 facing the base plate 110, while being fixedly connected to the module beam 120 on a side of the beam sidewall of the module beam 120 facing away from the base plate 110.

According to some embodiments of the present application, referring to FIG. 2 to FIG. 4 and FIG. 7, the module beam 120 is welded to the base plate 110 to form a welding portion.

It can be understood that, on the basis of the first side surface 111 of the base plate 110 being connected to the module beam 120 through the first protrusion portion 1131, the module beam 120 can further be welded to the base plate 110, so that the module beam 120 and the base plate 110 are welded to form a welding portion (not shown in the drawings), integrating the module beam 120 and the base plate 110 into a unified structure.

A welding form between the module beam 120 and the base plate 110 may include fusion welding, spot welding, or the like. As an example, in some specific implementations, a spot welding process may be selected for welding between the module beam 120 and the base plate 110, where spot welding can reduce the risk of the base plate 110 being burned through.

The specific location of the welding portion formed by welding the module beam 120 to the base plate 110 may be: on a beam sidewall of the module beam 120 fitted against the base plate 110, where welding is performed on the beam sidewall of the module beam 120 in contact with the base plate 110, so that the welding portion is formed between the beam sidewall of the module beam 120 and the base plate 110; or on a beam sidewall of the module beam 120 intersecting the base plate 110, that is, a beam sidewall intersecting the beam sidewall fitted against the base plate 110, where welding is performed at an end of the beam sidewall intersecting the base plate 110 and close to the base plate 110, so that the welding portion is formed between the base plate 110 and the beam sidewall of the module beam 120 intersecting the base plate 110.

With such an arrangement, welding the module beam 120 to the base plate 110 to form the welding portion can effectively enhance stability of the connection between the module beam 120 and the base plate 110, while the module beam 120 can also be connected to the base plate 110 through the first protrusion portion 1131. The multiple connection methods between the module beam 120 and the base plate 110 can effectively improve the connection strength between the module beam 120 and the base plate 110.

According to some embodiments of the present application, referring to FIG. 3, FIG. 4, and FIG. 7, the mounting beam 130 is welded to the base plate 110 to form a welding portion.

It can be understood that the second side surface 112 of the base plate 110 may be welded to the mounting beam 130, so that the mounting beam 130 and the base plate 110 are welded to form a welding portion, integrating the mounting beam 130 and the base plate 110 into a unified structure.

A welding form between the mounting beam 130 and the base plate 110 may include fusion welding, spot welding, or the like. As an example, in some specific implementations, a spot welding process may be selected for welding between the mounting beam 130 and the base plate 110, where spot welding can reduce the risk of the base plate 110 being burned through.

The specific location of the welding portion formed by welding the mounting beam 130 to the base plate 110 may be: on a beam sidewall of the mounting beam 130 fitted against the base plate 110, where welding is performed on the beam sidewall of the mounting beam 130 in contact with the base plate 110, so that the welding portion is formed between the base plate 110 and the beam sidewall of the mounting beam 130 fitted against the base plate 110; or on a beam sidewall of the mounting beam 130 intersecting the base plate 110, that is, a beam sidewall intersecting the beam sidewall fitted against the base plate 110, where welding is performed at an end of the beam sidewall intersecting the base plate 110 and close to the base plate 110, so that the welding portion is formed between the base plate 110 and the beam sidewall of the mounting beam 130 intersecting the base plate 110.

With such an arrangement, welding the mounting beam 130 to the base plate 110 to form the welding portion can effectively enhance stability of the connection between the mounting beam 130 and the base plate 110, while the mounting beam 130 can also be connected to the base plate 110 through a second protrusion portion 1133. The multiple connection methods between the mounting beam 130 and the base plate 110 can effectively improve the connection strength between the mounting beam 130 and the base plate 110.

According to some embodiments of the present application, referring to FIG. 2 to FIG. 4 and FIG. 7, the module beam 120 is welded to the base plate 110 to form a welding portion, and the mounting beam 130 is also welded to the base plate 110 to form a welding portion.

It can be understood that the first side surface 111 of the base plate 110 can be welded to the module beam 120, and the second side surface 112 of the base plate 110 can be welded to the mounting beam 130, so that the module beam 120 and the mounting beam 130 respectively form welding portions with the first side surface 111 and the second side surface 112 of the base plate 110, integrating the module beam 120 and the mounting beam 130 respectively with the base plate 110 into a unified structure.

With such an arrangement, welding the module beam to the base plate 110 to form the welding portion and welding the mounting beam 130 to the base plate 110 to form the welding portion can weld the mounting beam 130, the base plate 110, and the module beam 120 into a unified structure, thereby effectively enhancing stability of the connection between the mounting beam 130, the module beam 120, and the base plate 110.

According to some embodiments of the present application, referring to FIG. 2 to FIG. 4 and FIG. 7, in the thickness direction H of the base plate 110, a projection of the mounting beam 130 and a projection of the module beam 120 at least partially overlap; and at least a portion of each of the mounting beam 130, the module beam 120, and the base plate 110 are welded together to form a welding portion.

It can be understood that the projection of the mounting beam 130 and the projection of the module beam 120 at least partially overlap, meaning that in the thickness direction H of the base plate 110, the mounting beam 130, the base plate 110, and the module beam 120 have an overlapping portion, whereby a welding portion may be formed by welding at the overlapping portion of the mounting beam 130, the base plate 110, and the module beam 120, achieving fixed connection between the mounting beam 130, the base plate 110, and the module beam 120.

With such an arrangement, the mounting beam 130 and the module beam 120 can have at least partial overlap in the thickness direction H of the base plate 110, so that the mounting beam 130, the module beam 120, and the base plate 110 can be welded to form the welding portion connecting the three, enhancing the connection strength between the mounting beam 130, the module beam 120, and the base plate 110. When the housing 10 is mounted and used through the mounting beam 130, the mounting beam 130, the base plate 110, and the module beam 120 can form a connected integral structure, thereby effectively improving overall structural strength of the housing 10, thus achieving the purpose of meeting the high structural strength requirements of the housing 10.

According to some embodiments of the present application, referring to FIG. 3, FIG. 4, and FIG. 7, a welding clearance hole 122 is provided on a beam sidewall of the module beam 120 facing away from the base plate 110, and the welding portion is formed on a beam sidewall of the module beam 120 facing the base plate 110 and exposed through the welding clearance hole 122.

It can be understood that the welding clearance hole 122 is configured to facilitate welding operations. The welding clearance hole 122 may be a through hole in the beam sidewall of the module beam 120 on a side facing away from the base plate 110, so that a welding apparatus (for example, a welding head) can pass through the welding clearance hole 122 and perform welding operations on the beam sidewall of the module beam 120 on a side fitted against the base plate 110, enabling the module beam 120 and the base plate 110 to be welded to form the welding portion, or perform welding operations on the base plate 110 and the beam sidewall of the mounting beam 130 on a side fitted against the base plate 110, enabling the mounting beam 130 and the base plate 110 to be welded to form the welding portion.

Optionally, there may be one or a plurality of welding clearance holes 122; and the specific number of the welding clearance holes 122 may be determined based on a number of welding portions formed, where one welding portion can be formed through welding operation via one welding clearance hole 122.

With such an arrangement, during assembly, the welding clearance hole 122 can be used to facilitate welding operations, so that a welding apparatus (for example, a welding head) can pass through the welding clearance hole 122 to perform welding operations on the interior of the module beam 120, enabling the module beam 120 and the base plate 110 to be welded to form the welding portion, or enabling the mounting beam 130, the module beam 120, and the base plate 110 to be welded to form the welding portion connecting the three, thereby enhancing the connection strength between the mounting beam 130, the module beam 120, and the base plate 110.

According to some embodiments of the present application, referring to FIG. 3, FIG. 4, and FIG. 7, a welding clearance hole 122 is provided on a beam sidewall of the mounting beam 130 facing away from the base plate 110, the welding portion is formed on a beam sidewall of the mounting beam 130 facing the base plate 110 and exposed through the welding clearance hole 122.

It can be understood that the welding clearance hole 122 is configured to facilitate welding operations; and the welding clearance hole 122 may be a through hole in the beam sidewall of the mounting beam 130 on a side facing away from the base plate 110, so that a welding apparatus (for example, a welding head) can pass through the welding clearance hole 122 and perform welding operations on the beam sidewall of the mounting beam 130 on a side fitted against the base plate 110, enabling the mounting beam 130 and the base plate 110 to be welded to form the welding portion, or perform welding operations on the base plate 110 and the beam sidewall of the module beam 120 on a side fitted against the base plate 110, enabling the base plate 110 and the module beam 120 to be welded to form the welding portion.

Optionally, there may be one or a plurality of welding clearance holes 122; and the specific number of the welding clearance holes 122 may be determined based on a number of welding portions formed, where one welding portion can be formed through welding operation via one welding clearance hole 122.

With such an arrangement, during assembly, the welding clearance hole 122 can be used to facilitate welding operations, so that a welding apparatus (for example, a welding head) can pass through the welding clearance hole 122 to perform welding operations on the interior of the mounting beam 130, enabling the mounting beam 130 and the base plate 110 to be welded to form the welding portion, or enabling the mounting beam 130, the module beam 120, and the base plate 110 to be welded to form the welding portion connecting the three, thereby enhancing the connection strength between the mounting beam 130, the module beam 120, and the base plate 110.

According to some embodiments of the present application, referring to FIG. 3, FIG. 4, and FIG. 7, a welding clearance hole 122 is provided on a beam sidewall of the module beam 120 facing away from the base plate 110, and the welding portion is formed on a beam sidewall of the module beam 120 facing the base plate 110 and exposed through the welding clearance hole 122. In addition, a welding clearance hole 122 is also provided on a beam sidewall of the mounting beam 130 facing away from the base plate 110, the welding portion is formed on a beam sidewall of the mounting beam 130 facing the base plate 110 and exposed through the welding clearance hole 122.

It can be understood that welding clearance holes 122 are provided on both the module beam 120 and the mounting beam 130, and welding operations are performed through the respective welding clearance holes 122 on the module beam 120 side and the mounting beam 130 side, welding the module beam 120 to the base plate 110 to form a welding portion, and welding the mounting beam 130 to the base plate 110 to form a welding portion. Thus, the base plate 110, the module beam 120, and the mounting beam 130 are all welded to form a unified structure, effectively enhancing the connection strength between the base plate 110, the module beam 120, and the mounting beam 130, thereby improving structural strength of the housing 10.

According to some embodiments of the present application, referring to FIG. 2 to FIG. 4, FIG. 7, and FIG. 8, the reinforcement structure 113 includes a second protrusion portion 1133, the second protrusion portion 1133 is formed on the second side surface 112, and the second protrusion portion 1133 is configured to connect to the mounting beam 130.

The second protrusion portion 1133 is formed on the second side surface 112, and optionally, the second protrusion portion 1133 may be formed by the base plate 110 protruding toward the second side surface 112. Alternatively, the second protrusion portion 1133 may be formed by fixing an external component to the base plate 110 through welding, bonding, screwing, or the like.

The second protrusion portion 1133 may include but is not limited to a columnar structure, an arc-shaped structure, a hemispherical structure, or a block-shaped structure. There may be one or a plurality of second protrusion portions 1133, and when there are a plurality of second protrusion portions 1133, the plurality of second protrusion portions 1133 may be arranged along a length direction of the mounting beam 130 (perpendicular to the thickness direction H) on the second side surface 112, or the plurality of second protrusion portions 1133 may be distributed in an array on the second side surface 112.

The second protrusion portion 1133 is connected to the mounting beam 130, and optionally, the second protrusion portion 1133 may be connected to the mounting beam 130 through bonding, welding, or screwing. Alternatively, the second protrusion portion 1133 may be inserted into the interior of the mounting beam 130 and then connected to the mounting beam 130 through bonding, welding, or screwing.

With such an arrangement, the second protrusion portion 1133 is formed on the second side surface 112 of the base plate 110. The second protrusion portion 1133 is used to connect the mounting beam 130, so as to enhance the connection strength between the mounting beam 130 and the base plate 110, thereby effectively reducing the risk of deformation or fracture between the base plate 110 and the mounting beam 130 when the housing 10 is connected for use, enabling the housing 10 of the battery 100 to bear a heavier weight when assembled through the mounting beam 130.

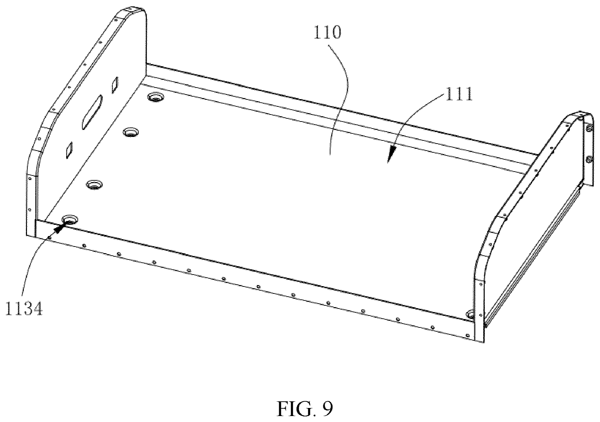

According to some embodiments of the present application, referring to FIG. 3, FIG. 4, FIG. 7 to FIG. 9, a second cavity 1134 is formed on a side of the second protrusion portion 1133 facing away from the mounting beam 130.

It can be understood that the second protrusion portion 1133 may be a structure protruding from the second side surface 112 formed by the base plate 110 recessed toward the second side surface 112, thereby forming the second cavity 1134 on the side of the second protrusion portion 1133 facing away from the mounting beam 130.

With such an arrangement, a processing procedure for the second protrusion portion 1133 on the base plate 110 may be performed concurrently with a processing procedure for manufacturing the base plate 110, thereby effectively reducing manufacturing procedures for the housing 10 and improving manufacturing efficiency of the housing 10. In addition, the second protrusion portion 1133 is formed through recessing of the base plate 110 itself with the second cavity 1134 at its back, and as compared to adding an external structure to form the second protrusion portion 1133, the weight of the housing 10 is not increased, thereby improving a force exerted on the mounting beam 130 by the housing 10 when assembled through the mounting beam 130, reducing the probability of damage to the mounting beam 130.

Optionally, a protrusion block may be added to the module beam 120, so that when the module beam 120 is assembled on the first side surface 111, the protrusion block can be inserted into the second cavity 1134. Then, when the mounting beam 130 and the second protrusion portion 1133 are welded, the protrusion block, the mounting beam 130, and the second protrusion portion 1133 may also be welded together to form a unified structure, improving the connection strength between the module beam 120, the base plate 110, and the mounting beam 130. The method of adding the protrusion block to the module beam 120 may include welding an external block to a beam sidewall of the module beam 120 facing the base plate or screwing a block to the beam sidewall of the module beam 120 facing the base plate, or the like.

According to some embodiments of the present application, referring to FIG. 3, FIG. 4, FIG. 7, and FIG. 8, there are a plurality of second protrusion portions 1133, and the plurality of second protrusion portions 1133 are disposed on the second side surface 112 at intervals.

The second protrusion portions 1133 may be disposed at intervals on the second side surface 112 along any direction. As an example, in some specific implementations, the plurality of second protrusion portions 1133 may be distributed at intervals along a length direction of the mounting beam 130, and when the mounting beam 130 is disposed on the second side surface 112, the plurality of second protrusion portions 1133 may be distributed along the length direction of the mounting beam 130 and respectively connected to the mounting beam 130, thereby achieving reinforced connection between the mounting beam 130 and the second side surface 112, effectively improving the connection strength between the mounting beam 130 and the base plate 110.

With such an arrangement, the plurality of second protrusion portions 1133 are formed on the second side surface 112 of the base plate 110. The plurality of second protrusion portions 1133 are used to connect the mounting beam 130, thereby increasing connection points between the mounting beam 130 and the second side surface 112 of the base plate 110, effectively enhancing the connection strength between the mounting beam 130 and the base plate 110, and thus effectively reducing the risk of deformation or fracture between the base plate 110 and the mounting beam 130.

According to some embodiments of the present application, referring to FIG. 3, FIG. 4, FIG. 7, and FIG. 8, a gap is formed between a beam sidewall of the mounting beam 130 facing away from the base plate 110 and the base plate 110, and the second protrusion portion 1133 is connected to a beam sidewall of the module beam 120 facing away from the base plate 110.

It can be understood that the mounting beam 130 may be a rectangular beam (that is, a cross-section of the module beam 120 is rectangular), a reversed U-shaped beam (that is, a cross-section of the module beam 120 is approximately reversed U-shaped), or other beam structures. In some implementations of this embodiment, the mounting beam 130 may be selected as a reversed U-shaped beam, that is, the mounting beam 130 includes a first beam sidewall, second beam sidewalls formed by bending at opposite ends of the first beam sidewall toward a same direction, and third beam sidewalls respectively bent at ends of the second beam sidewalls facing away from the first beam sidewall and facing away from the first beam sidewall; when the mounting beam 130 is fixedly assembled on the second side surface 112 of the base plate 110, the two third beam sidewalls of the mounting beam 130 respectively abut the second side surface 112, and the first beam sidewall is the beam sidewall facing away from the base plate 110, with the gap formed between the first beam sidewall and the base plate 110.

When the mounting beam 130 is assembled on the second side surface 112 of the base plate 110, the second protrusion portion 1133 on the second side surface 112 can be accommodated within the interior of the mounting beam 130, so that the second protrusion portion 1133 can be connected to an inner side surface of the mounting beam 130. As an example, the second protrusion portion 1133 may be connected to the first beam sidewall and/or the second beam sidewall of the mounting beam 130. In some specific implementations of this embodiment, the second protrusion portion 1133 may be connected to the first beam sidewall of the mounting beam 130 (that is, the beam sidewall of the mounting beam 130 facing away from the base plate 110), where a connection method of the second protrusion portion 1133 to the mounting beam 130 may include bonding, welding, screwing, or the like.

It can be understood that the third beam sidewall of the mounting beam 130 is fitted against the second side surface 112 of the base plate 110, and the third beam sidewall may be reinforcedly connected to the base plate 110 through bonding or welding, so as to further improve the connection strength between the mounting beam 130 and the base plate 110.

With such an arrangement, the second protrusion portion 1133 can be located within the gap between the beam sidewall of the mounting beam 130 facing away from the base plate 110 and the base plate 110 and connected to the beam sidewall of the mounting beam 130 facing away from the base plate 110, thereby achieving the purpose of structural reinforcement of the base plate 110 with the mounting beam 130 through the second protrusion portion 1133.

According to some embodiments of the present application, referring to FIG. 3, FIG. 4, FIG. 7, and FIG. 8, an adhesive layer is further provided between the module beam 120 and the base plate 110, and the module beam 120 is fixed to the base plate 110 through the adhesive layer.

It can be understood that an adhesive layer may be provided on at least one of the base plate 110 and the module beam 120, and when the module beam 120 is assembled on the base plate 110, on the basis of the module beam 120 being connected to the base plate 110 through the first protrusion portion 1131, the module beam 120 and the base plate 110 can further be reinforcedly connected through the adhesive layer. The adhesive layer may use an adhesive such as spot welding glue.

With such an arrangement, on the basis of the module beam 120 and the base plate 110 being connected through the first protrusion portion 1131 or fixed by welding, the adhesive layer is further used to bond the module beam 120 to the base plate 110, thereby enhancing stability of the connection between the module beam 120 and the base plate 110, and thus enhancing the connection strength between the module beam 120 and the base plate 110, achieving the purpose of meeting the high structural strength requirements of the housing 10.

According to some embodiments of the present application, referring to FIG. 3, FIG. 4, FIG. 7, and FIG. 8, an adhesive layer is further provided between the mounting beam 130 and the base plate 110, and the mounting beam 130 is fixed to the base plate 110 through the adhesive layer.

It can be understood that an adhesive layer may be provided on at least one of the base plate 110 and the mounting beam 130, and when the mounting beam 130 is assembled on the base plate 110, on the basis of the mounting beam 130 being connected to the base plate 110 through the second protrusion portion 1133, the mounting beam 130 and the base plate 110 can further be reinforcedly connected through the adhesive layer. The adhesive layer may use an adhesive such as spot welding glue.

With such an arrangement, on the basis of the mounting beam 130 and the base plate 110 being connected through the second protrusion portion 1133 or fixed by welding, the adhesive layer is further used to bond the mounting beam 130 to the base plate 110, thereby enhancing stability of the connection between the mounting beam 130 and the base plate 110, and thus enhancing the connection strength between the mounting beam 130 and the base plate 110, achieving the purpose of meeting the high structural strength requirements of the housing 10.

According to some embodiments of the present application, referring to FIG. 3, FIG. 4, FIG. 7, and FIG. 8, an adhesive layer is further provided between the module beam 120 and the base plate 110, and the module beam 120 is fixed to the base plate 110 through the adhesive layer. In addition, an adhesive layer is further provided between the mounting beam 130 and the base plate 110, and the mounting beam 130 is fixed to the base plate 110 through the adhesive layer.

With such an arrangement, both the module beam 120 and the mounting beam 130 can use the adhesive layer to enhance connection strength with the base plate 110, thereby effectively enhancing connection strength between the base plate 110, the module beam 120, and the mounting beam 130.

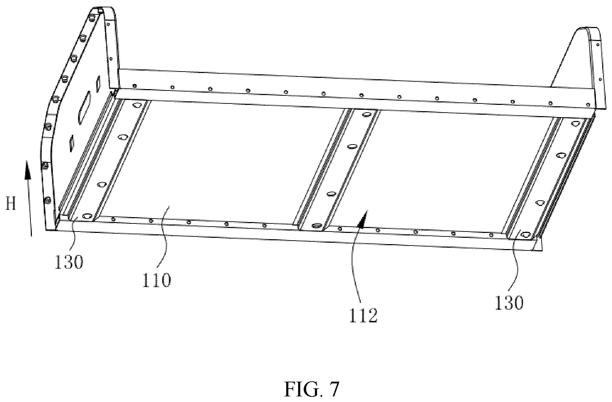

According to some embodiments of the present application, referring to FIG. 3 and FIG. 7, the base plate 110 is provided with fluid channels, and the fluid channels contain a heat exchange medium for heat exchange with the battery module 20.

The fluid channels are configured to allow flow of the heat exchange medium, so that the heat exchange medium performs heat exchange with the battery module 20, achieving the purpose of cooling the battery module 20. Optionally, the heat exchange medium may be a liquid medium, for example, cooling water or cooling oil.

Optionally, the fluid channels may be formed by a blow molding process. In other words, the base plate 110 may be a blow-molded cold plate formed by the blow molding process. Due to the process of the blow-molded cold plate, the blow-molded cold plate has a relatively low mass, thus using the blow-molded cold plate as the base plate 110 can reduce an overall weight of the housing 10.

It can be understood that the base plate 110 may also be a brazed cold plate formed by a stamping process.

As an example, in some specific implementations, the housing 10 may include a base plate 110, a module beam 120, and a mounting beam 130, where the base plate 110 may be a blow-molded cold plate formed by a blow molding process, and the base plate 110 can be recessed toward the first side surface 111 to form a first protrusion portion 1131; the module beam 120 is an extruded aluminum structure, preferably a 6-series aluminum structure; a through hole is provided on a beam sidewall of the module beam 120 facing the base plate 110, and a welding clearance hole 122 is provided on a beam sidewall of the module beam 120 facing away from the base plate 110; when the module beam 120 is assembled on the first side surface 111 of the base plate 110, the first protrusion portion 1131 can pass through the through hole and abut the beam sidewall of the module beam 120 facing away from the base plate 110, and the first protrusion portion 1131 and the beam sidewall of the module beam 120 facing away from the base plate 110 can be welded into an integral structure through a spot welding process, while the beam sidewall of the module beam 120 facing the base plate 110 and the base plate 110 are spot-welded through the welding clearance hole 122 to form an integral structure, and in addition, the module beam 120 and the first side surface 111 are further reinforcedly connected through spot welding glue, effectively enhancing the connection strength between the module beam 120 and the base plate 110. Furthermore, the mounting beam 130 is assembled on the second side surface 112 of the base plate 110, and the mounting beam 130 and the base plate 110 may also be welded into a unified structure through a spot welding process, or the mounting beam 130, the base plate 110, and the module beam 120 are welded into a unified structure through a spot welding process, and spot welding glue is further used to bond a contact area between the mounting beam 130 and the second side surface 112, achieving reinforced connection between the mounting beam 130 and the base plate 110.

According to some embodiments of the present application, referring to FIG. 2, according to a second aspect, an embodiment of the present application further provides a battery 100 including a battery module 20 and the housing 10 as described above, where the battery module 20 is accommodated within the housing 10 and mounted on the module beam 120. The battery 100 provided in the embodiments of the present application includes the above housing 10, and on the basis of the high structural strength of the housing 10, the battery 100 also has high structural strength, with a lower risk of deformation, fracture, or other damage to the housing 10 when the battery 100 is connected for use.

According to some embodiments of the present application, referring to FIG. 1, according to a third aspect, an embodiment of the present application further provides an electric device including the battery 100 as described above, where the battery 100 is configured to provide electrical energy. The electric device may be any electric device introduced in the above embodiments, such as a vehicle 1000, and details are not repeated herein.

The electric device provided in the embodiments of the present application includes the above battery 100, and on the basis of the high structural strength of the battery 100, the battery 100 can more stably provide electrical energy to the electric device.

The above are merely preferred embodiments of the present application and are not intended to limit the present application. Any modifications, equivalent replacements, improvements, and the like made within the spirit and principles of the present application shall be included within the protection scope of the present application.

## Claims

1. A housing configured to accommodate a battery module, **characterized by** comprising:
a base plate having a first side surface and a second side surface opposite to each other in a thickness direction, wherein a reinforcement structure is provided on the base plate;
a module beam configured to mount the battery module, wherein the module beam is disposed on the first side surface; and
a mounting beam configured to mount the housing, wherein the mounting beam is disposed on the second side surface;
wherein the reinforcement structure is configured to connect to the mounting beam and/or the module beam.

2. The housing according to claim 1, **characterized in that** the reinforcement structure comprises a first protrusion portion, the first protrusion portion is formed on the first side surface, and the first protrusion portion is configured to connect to the module beam.

3. The housing according to claim 2, **characterized in that** a first cavity is formed on a side of the first protrusion portion facing away from the module beam.

4. The housing according to claim 2 or 3, **characterized in that** a plurality of first protrusion portions are provided, and the plurality of first protrusion portions are disposed at intervals on the first side surface at intervals.

5. The housing according to any one of claims 2 to 4, **characterized in that** a clearance portion is provided on a beam sidewall of the module beam facing the base plate, and the first protrusion portion is configured to be inserted into the clearance portion.

6. The housing according to claim 5, **characterized in that** the clearance portion is a through hole in the beam sidewall of the module beam facing the base plate.

7. The housing according to claim 5 or 6, **characterized in that** the first protrusion portion is connected to a beam sidewall of the module beam facing away from the base plate.

8. The housing according to any one of claims 1 to 7, **characterized in that** the module beam is welded to the base plate to form a welding portion, and/or the mounting beam is welded to the base plate to form a welding portion.

9. The housing according to claim 8, **characterized in that** in the thickness direction of the base plate, a projection of the mounting beam and a projection of the module beam at least partially overlap; and at least a portion of each of the mounting beam, the module beam, and the base plate are welded together to form the welding portion.

10. The housing according to claim 8 or 9, **characterized in that** a welding clearance hole is provided on a beam sidewall of the module beam facing away from the base plate, and the welding portion is formed on a beam sidewall of the module beam facing the base plate and exposed through the welding clearance hole; and/or
a welding clearance hole is provided on a beam sidewall of the mounting beam facing away from the base plate, and the welding portion is formed on a beam sidewall of the mounting beam facing the base plate and exposed through the welding clearance hole.

11. The housing according to any one of claims 1 to 10, **characterized in that** the reinforcement structure comprises a second protrusion portion, the second protrusion portion is formed on the second side surface, and the second protrusion portion is configured to connect to the mounting beam.

12. The housing according to claim 11, **characterized in that** a second cavity is formed on a side of the second protrusion portion facing away from the mounting beam.

13. The housing according to claim 11 or 12, **characterized in that** there are a number of the second protrusion portions, and the plurality of second protrusion portions are disposed at intervals on the first side surface.

14. The housing according to any one of claims 11 to 13, **characterized in that** a gap is formed between a beam sidewall of the mounting beam facing away from the base plate and the base plate, and the second protrusion portion is connected to a beam sidewall of the mounting beam facing away from the base plate.

15. The housing according to any one of claims 1 to 14, **characterized in that** an adhesive layer is further provided between the module beam and the base plate, and the module beam is fixed to the base plate through the adhesive layer; and/or
an adhesive layer is further provided between the mounting beam and the base plate, and the mounting beam is fixed to the base plate through the adhesive layer.

16. The housing according to any one of claims 1 to 15, **characterized in that** the base plate is provided with fluid channels, and the fluid channels contain a heat exchange medium for heat exchange with the battery module.

17. A battery, **characterized by** comprising a battery module and the housing according to any one of claims 1 to 16, wherein the battery module is accommodated within the housing and mounted on the module beam.

18. An electric device, **characterized by** comprising the battery according to claim 17, wherein the battery is configured to provide electrical energy.
